# EUROPEAN PATENT SPECIFICATION

(11) **EP 2 794 254 B1**
(45) Date of publication and mention of the grant of the patent: **07.12.2016**
(21) Application number: 12823109.9
(22) Date of filing: 20.12.2012
(51) Int. Cl.: B30B 9/32, B09B 3/00, B09B 5/00

(54) **SYSTEM AND METHOD FOR FORMING FIGURES FROM USED CAPSULES AND CONTAINERS**
SYSTEM UND VERFAHREN ZUR HERSTELLUNG VON FIGUREN AUS GEBRAUCHTEN KAPSELN UND BEHÄLTERN
SYSTÈME ET PROCÉDÉ DE FORMATION DE FIGURES À PARTIR DE CAPSULES ET DE RÉCIPIENTS USAGÉS

(30) Priority: 23.12.2011 ES 201132091
(43) Date of publication of application: 29.10.2014
(73) Proprietor: Nesss Entertainment, S. L., 08187 Santa Eulàlia de Ronçana Barcelona (ES)
(72) Inventor: PIQUERAS NADAL, Alan, E-08187 Santa Eulàlia de Ronçana, Barcelona (ES); PORTABELLA DE VILLALONGA, Ignacio, E-08187 Santa Eulàlia de Ronçana, Barcelona (ES); GARCÍA MONTES, Pedro José, E-08187 Santa Eulàlia de Ronçana, Barcelona (ES)
(74) Representative: Gallego Jiménez, José Fernando
(86) International application number: PCT/IB2012/057561
(87) International publication number: WO 2013/093854

(56) References cited:
- WO-A1-2011/051867
- ES-A1- 2 330 075
- JP-A- 7 164 192
- JP-A- H07 164 192

## Description

### Object of the invention.

The present invention relates to a system and method for forming figures from used capsules and containers, preferably in metal; It is a household system that enables the user to easily and inexpensively obtain a figure or piece to which different uses may be given, from empty beverage cans or product containment capsules used in the preparation of various beverages or infusions such as coffee, tea or the like.

### Application field of the invention.

The present invention is applicable in the field of making crafts and utilization of materials for reuse or recycling.

### Background of the invention.

At present the product containment containers for household consumption become a waste product once their content has been consumed, this waste being more or less clean and usable by its modifying or direct use. For example, containers such as bottles, jars or cans, after being cleaned, can be reused to contain liquids or other products, giving the user a benefit of an object or waste product otherwise intended for disposal.

In the event that the waste product is metallic, such as beverage containers of the can type, or coffee capsules made from aluminium, recycling and reuse requires modification of said residue, compared to the option of waste industrial recycling or throwing away as trash, which do not provides a value to the user.

Currently there are no tools or devices that allow for an easy and direct performing of such modifications through which to obtain figures or practical or decorative items. Many users have turned to the craft, or craftsmanship, as pastime with which occupy their leisure time and are taking advantage of these containers and capsules, or as a practical option for their recycling. When working with metallic materials they often happen to work with scissors, knives, chisels, pliers and other tools that can be dangerous for an inexperienced user. This is because the capsule body comprises a laminate trunco-conical bell-shaped body made in aluminium, with the larger base having an opening on which a sealing film made of aluminium is fixed. Inside this capsule is a small amount of tea or ground coffee, and that is a problem for the direct recycling of the used capsule, as there is non-recyclable organic material together with the metallic outside.

The US patent application US2010/0050880 document for a "DEVICE AND METHOD FOR SEPARATING CONTENTS AND PACKAGE OF A CAPSULE" is known; it describes a device and a method for separating the metallic capsule from the coffee or infusion content mainly used to recycle both materials separately. This device comprises a manual press which enables the capsule crushing, so that the inner organic residue is ejected out of said capsule. This invention comes from the fact that the packaging used for the capsule cannot be considered as a clean container as it contains an organic material, and it cannot be defined as an organic material either for composting delivery as it has an external metallic body. However, this device only provides a tool for easily opening and separation of the two parts of the packaging of the capsule as waste, but does not allow the user to obtain a benefit or direct use of that metallic part, except the satisfaction of contributing to the conservation of the environment.

Also known is the Spanish utility model document ES1046586 for a "Dispositivo de prensado, en especial para envases de lata" (Pressing device, especially for tin cans), which describes a device comprising a support on which the object to be pressed is placed and a head provided with a movable stem, at which end a disc or plate acting on the object to press is attached. This device is designed to reduce the dimensions of a beverage package of the can type once the inside product has been consumed, obtaining, by pressing, a disc or discoidal waste product which is more compact for its disposal, for example in recycling trash containers for metallic materials. However, the pressed and compacted container does not provide an add value to the user, apart from the reduction of volume.

WO 2011/051867 A1 describes a separating device for machines for preparing beverages.

JP 07164192 A describes a method for processing empty cans.

The applicant of the present invention is not aware of invention backgrounds which satisfactorily solve the issues presented.

### Description of the invention.

The system and the method for forming figures from used metal capsules and containers, object of this invention, exhibit technical particularities intended to allow users to get a safe and convenient desired use of such containers and capsules before being discarded as waste.

The system for forming figures from used metal capsules and containers is of the type comprising at least a pressing means provided with a power actuator associated with a pusher and an anvil, the one opposing to the other, for pressing the empty capsules and containers into a disc.

According to the invention, the system comprises means for die-cutting the disc, which are removable and interchangeable, and that comprise a male die or punch and a female die or matrix, both related by mutual guiding means, and this punch and matrix being placeable between the pusher and the anvil for die-cutting the disk placed therebetween and with which the figure in question is formed.

Thus the system allows the user to obtain a useful object, the figure in question, without undue risk using more traditional cutting tools, such as pliers, knives, scissors, hammers and others. The pressing means provide two complementary actions, consisting in making a metal disk from the capsule or container and subsequently the simple die-cutting of the figure in an accurate and quick way.

The system is designed initially to operate with metal coffee capsules (such as those sold under the trademark Nespresso ®) or tea capsules (available from Special-t ®) that are abundant and are generated in large number, but also can be applied to other types of capsules or containers of soda beverage type using a suitable design and dimensioning to fit to more resistant and large articles.

Thus, the system comprises a tool with a seat for placement of a capsule by its mouth, and a blade with a closed contour on said seat for opening the mouth of the capsule before placing it empty in the pressing means. With this tool the sheet that closes the mouth of the capsule is torn, thus uncovering the contained ground coffee in order to remove it by leaving the metal part of the capsule ready for its transformation into a figure.

In one embodiment, the pusher and the anvil have their facing sides formed with reliefs for shaping the outline of the disk. These reliefs and protrusions allow for the shaped discs to be regular disks for their later placement within the die-cutting means.

In turn, the punch and matrix have on their outer sides a shape corresponding to the coupling on the opposing faces of the pusher and the anvil. In this way it is ensured that during the die-cutting of the figure, this set of punch and matrix does not experience deviations and adjustment, thus simplifying the placement and increasing the quality of the obtained product.

In one embodiment, the guiding means comprise a semi-tubular extended skirt in front of the male die or punch and a groove in said skirt of the matrix or female die, while the punch and the matrix enable mutual axial displacement, without possibility of rotation. These guiding means are simple to manufacture, of robust constitution and reliable operation.

The method for forming figures from used metal capsules and containers comprises the steps of:
- crushing the empty capsule or container into a disk by means of pressing means,
- forming a figure by die-cutting it from the disk by die means inserted in said pressing means.

The fact that for the two steps of the method a single pressing tool is used simplifies the preparation of the figures and allows repeatability.

As discussed above in the description of the system, the method comprises the opening of the inside of the used capsule by means of a tool that opens its front mouth thus allowing the emptying and extraction of its content. Using this tool is not necessary when forming parts or figures from containers of the type of soda cans, because once the drink has been consumed, they do not usually contain any non-metallic residue inside. However, in the case of coffee or tea capsules, it is necessary to remove the used ground coffee or cured leaves by the quick opening of said capsule.

The disc die-cutting phase comprises placing the disc between a punch and a matrix conforming the die means and placeable within the pressing means in a removable and interchangeable way. Thus with the same pressing means and several sets of different punches and matrixes it is possible to perform a multitude of different shapes. Also, system manufacturing costs are reduced regarding the number of different shapes that can be produced, since only the set of punch and die being used changes.

This invention enables the usage of used or unused capsules and containers, making crafts with simple and secure elements.

The power actuator of the pressing means can be of various kinds. Thus, the power actuator comprises any manual actuation which multiplies the force exerted by the user to compress and die the capsule or container effectively and without effort, such as lever, rack, screw or any other.

### Description of figures.

In order to complement the description that is being carried out and with the purpose of facilitating the understanding of the characteristics of the invention, the present description is accompanied by a set of drawings wherein, by way of a non-limiting example, the following has been represented:

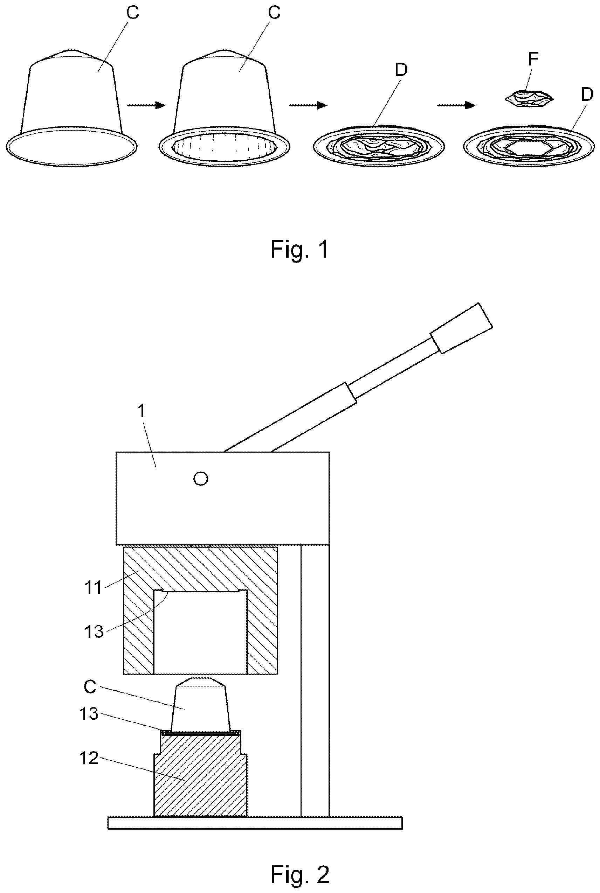

- Figure 1 is a schematic representation of the method for forming figures from used metal capsules and containers according to the invention.
- Figure 2 shows a schematic representation of the device before crushing the capsule.
- Figure 3 shows the step of approximating the pusher and the anvil with the corresponding crushing of the capsule into a disk.
- Figure 4 shows a perspective view of the set of punch and matrix conforming the die means.

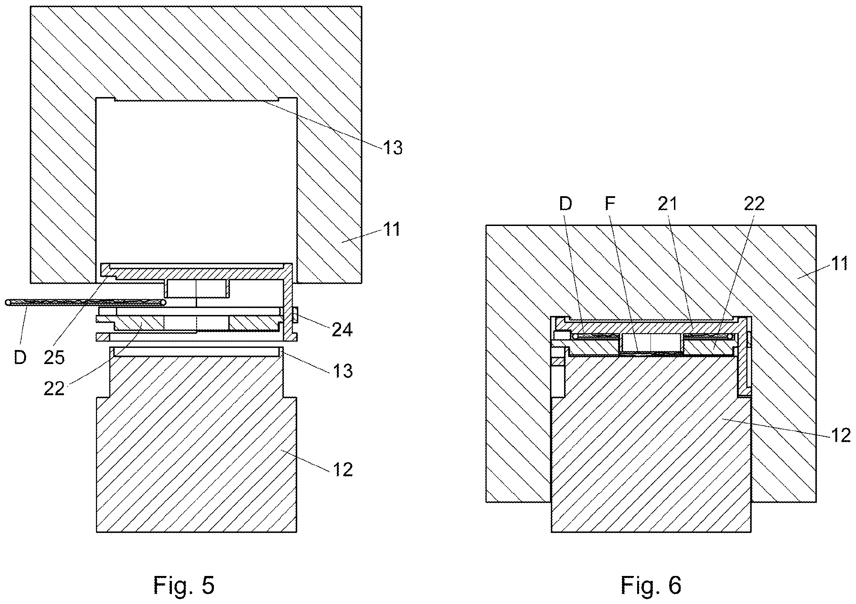

- Figure 5 shows a profile view sectioned along a vertical plane of the die means mounted on the pressing means during the introduction of the disk.
- Figure 6 shows a view of the actuation of the pressing and die means, with a figure being die-cut.

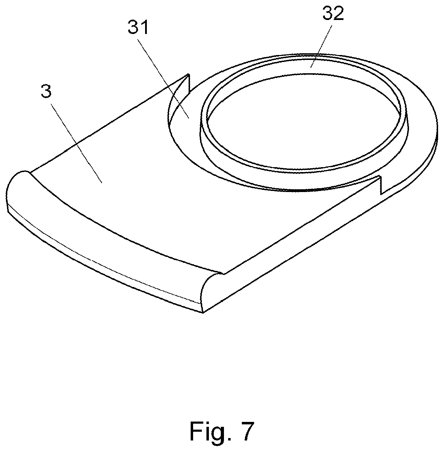

- Figure 7 shows a perspective view of the opening tool for emptying the capsules.
- Figure 8 shows a perspective view of an alternative embodiment of the tool for emptying capsules provided with a serrated blade.
- Figure 9 shows an elevation view of the tool of Figure 8.
- Figures 10 and 11 show respectively perspective views of upper and lower perspective shaped punching means by a punch and a die suitable for obtaining stellate polygonal figures.
- Figure 12 shows an elevation view of the punching means 10 and 11 during operation by a pusher against an anvil.
- Figure 13 shows a section along the plane AA' of Figure 12.

### Preferred embodiment of the invention.

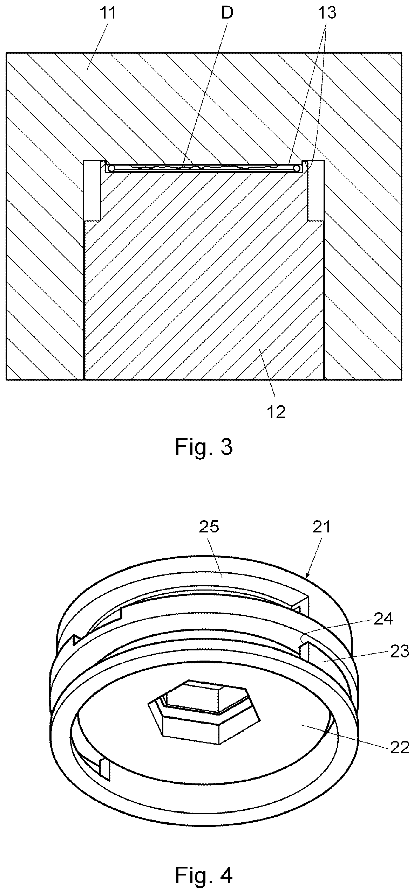

As can be seen in the referenced figures, the system of the invention comprises pressing means, in this case provided with a power actuator (1) which moves a pusher (11) and an anvil (12) in an opposing way, between which a capsule (C) for being crushed into a disc (D) is placed, as shown in Figure 3. The system also comprises die means, formed by a male die or punch (21) and a female die or matrix (22) opposing the one with respect to the other through guiding means for die-cutting the crushed disc (D) once placed inside. For die-cutting the disk (D) and obtaining a figure (F), these die means are arranged between the pusher (11) and the anvil (12) which carry out the displacement and cutting in a second step of the forming process.

The pusher (11) and the anvil (12) of the pressing means have reliefs (13) or projections on their facing surfaces, which allow the homogeneous configuration of the disk (D) with a regular outline.

In turn, the punch (21) and the matrix (22) have a corresponding shape for the coupling on the opposing faces of the pusher (11) and the anvil (12) on their outer faces. The guiding means between the punch and the matrix are made up, in this case, by a semi-tubular skirt (23) extended in front of the punch (21) and a slot (24) for housing said skirt (23) in the matrix (22), defining a side window (25) through which the disc (D) to be die-cut is introduced and removed once the figure (F) has been formed.

In order to be able to empty the capsules (C) before crushing and die-cutting them, the system comprises a tool (3) with a seat (31) for the placement of a capsule (C) by its mouth, and a blade (32) in said seat (31) for opening the mouth of the capsule (C).

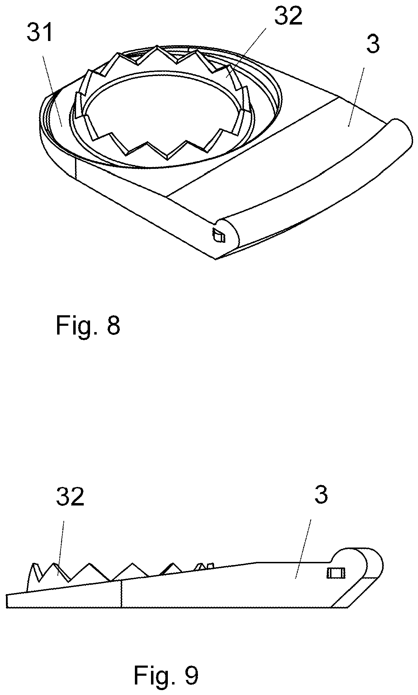

In the example shown in Figures 8 and 9 the tool (3) for opening the capsules has a blade (32) gear.

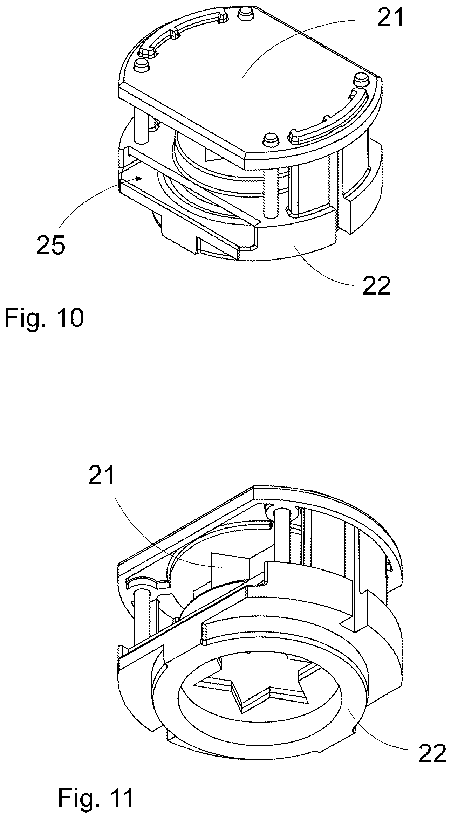

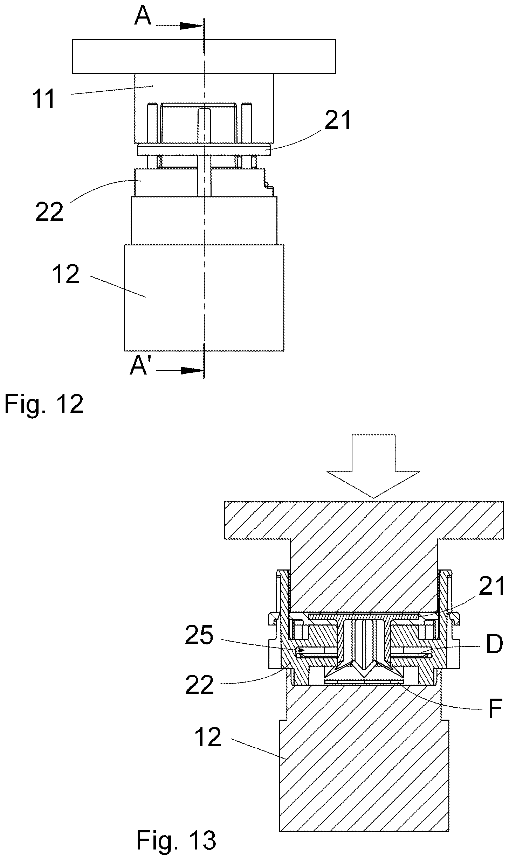

In the embodiment shown in Figures 10 to 13 the punch (21) is mounted allowing the vertical displacement on a guiding means protruding upper part of the matrix (22), the punch (21) and the matrix (22) being prepared for punching from a disc (D) previously squashed figure (F) with starry polygonal contour, in particular hexagonal.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. System for forming figures from used capsules and containers, of the type comprising at least pressing means provided with a power actuator (1) associated with a pusher (11) and an anvil (12), the one opposing to the other, for pressing the empty capsules (C) and containers and obtaining a disc (D), **characterized in that** it comprises means for die-cutting the disc (D), which are removable and interchangeable and which comprise a punch (21) or male die and a corresponding matrix (22) or female die, connected by mutual guiding means, this punch (21) and this matrix (22) being placeable between the pusher (11) and the anvil (12) for die-cutting the disc (D) arranged between the punch (21) and the matrix (22), with which a figure (F) is formed.

2. System according to claim 1, **characterized in that** it comprises a tool (3) with a seat (31) for placement of a capsule (C) by its mouth, and a blade (32) in said seat (31) for opening the mouth of the capsule (C) before its placement, once emptied, in the pressing means.

3. System according to any of the preceding claims, **characterized in that** the pusher (11) and the anvil (12) have their facing sides formed with reliefs (13) for forming the outline of the disc (D).

4. System according to claim 3, **characterized in that** the punch (21) and the matrix (22) have a corresponding conformation on their outer faces for the coupling on the opposing faces of the pusher (11) and the anvil (12).

5. System according to any of the preceding claims, **characterized in that** the guiding means comprise a semi-tubular skirt (23) extended in front of the punch (21), and a slot (24) for housing said skirt (23) in the matrix (22), with this punch (21) and this matrix (22) being enabled for mutual axial displacement, without possibility of rotation.

6. Method for forming figures from used capsules and containers, **characterized in that** it comprises the steps of:
- crushing the empty capsule (C) or container into a disk (D) by means of pressing means,
- forming a figure (F) by die-cutting it from the disk (D) by die means inserted in said pressing means.

7. Method according to claim 6, **characterized in that** it comprises the opening of the inside of the used capsule (C) by a tool (3) that opens its front mouth for allowing the emptying and extraction of its content.

8. Method according to any of claims 6 to 7, **characterized in that** the step of die-cutting of the disk (D) comprises placing the disc (D) between a punch (21) and a matrix (22), both making up the die means and being placeable within the pressing means in a removable and interchangeable way.

## Patentansprüche

1. System zur Herstellung von Figuren aus gebrauchten Kapseln und Behältern der Art, die zumindest eine Presseinrichtung umfasst, die mit einem Leistungsantrieb (1), der mit einem Stößel (11) und einem Amboss (12) verbunden ist, ausgestattet ist, von denen eines dem anderen gegenüberliegt, um die leeren Kapseln (C) und Behälter zu pressen und eine Scheibe (D) zu erhalten, **dadurch gekennzeichnet, dass** es Mittel zum Stanzen der Scheibe (D) umfasst, die entfernbar und austauschbar sind und die ein Locheisen (21) oder einen Stempel und eine entsprechende Matrize (22) oder Negativwerkzeug umfassen, die durch gemeinsame Führungsmittel verbunden sind, wobei dieses Locheisen (21) und diese Matrize (22) zwischen dem Stößel (11) und dem Amboss (12) zum Stanzen der zwischen dem Locheisen (21) und der Matrize (22) angeordneten Scheibe (D) anordenbar sind, wodurch eine Figur (F) hergestellt wird.

2. System nach Anspruch 1, **dadurch gekennzeichnet, dass** es ein Werkzeug (3) mit einer Auflagefläche (31) zum Anordnen einer Kapsel (C) mit ihrer Öffnung und einer Klinge (32) in der Auflagefläche (31) zum Öffnen der Öffnung der Kapsel (C) vor ihrer Anordnung, sobald diese leer ist, in der Presseinrichtung umfasst.

3. System nach einem der vorstehenden Ansprüche, **dadurch gekennzeichnet, dass** der Stößel (11) und der Amboss (12) zugewandte Seiten aufweisen, die mit Aussparungen (13) ausgebildet sind, um die Kontur der Scheibe (B) auszubilden.

4. System nach Anspruch 3, **dadurch gekennzeichnet, dass** das Locheisen (21) und die Matrize (22) eine zusammenpassende Gestalt an ihren Außenflächen für die Verbindung auf den gegenüberliegenden Flächen des Stößels (11) und des Amboss (12) aufweisen.

5. System nach einem der vorstehenden Ansprüche, **dadurch gekennzeichnet, dass** die Führungsmittel eine halbrohrförmige Einfassung (23), die sich vor dem Locheisen (21) erstreckt, und eine Vertiefung (24) zum Aufnehmen der Einfassung (23) in der Matrize (22) umfassen, wobei diesem Locheisen (21) und dieser Matrize (22) eine wechselseitige axiale Verlagerung ermöglicht wird, ohne die Möglichkeit einer Drehung.

6. Verfahren zur Herstellung von Figuren aus gebrauchten Kapseln und Behältern, **dadurch gekennzeichnet, dass** es die folgenden Schritte umfasst:
- Zerdrücken der leeren Kapsel (C) oder des leeren Behälters zu einer Scheibe (D) mittels einer Presseinrichtung,
- Herstellen einer Figur (F) durch Stanzen derselben aus der Scheibe (D) durch Stanzmittel, die in der Presseinrichtung eingesetzt sind.

7. Verfahren nach Anspruch 6, **dadurch gekennzeichnet, dass** es das Öffnen der Innenseite der gebrauchten Kapsel (C) durch ein Werkzeug (3) umfasst, das ihre Vorderöffnung öffnet, um das Leeren und Herausziehen ihres Inhalts zu ermöglichen.

8. Verfahren nach einem der Ansprüche 6 bis 7, **dadurch gekennzeichnet, dass** der Schritt des Stanzens der Scheibe (D) ein Anordnen der Scheibe (D) zwischen einem Locheisen (21) und einer Matrize (22) umfasst, wobei beide die Stanzmittel darstellen und innerhalb der Presseinrichtung in einer entfernbaren und austauschbaren Art und Weise anordenbar sind.

## Revendications

1. Système de formation de figures à partir de capsules et de récipients usagés, du type comprenant au moins un moyen de pressage doté d'un actionneur de puissance (1) associé à un poussoir (11) et une enclume (12), opposés l'un à l'autre, pour le pressage des capsules (C) et des récipients vides et l'obtention d'un disque (D), **caractérisé en ce qu'**il comprend des moyens pour découper à l'emporte-pièce le disque (D), qui sont amovibles et interchangeables et qui comprennent un poinçon (21) ou une matrice mâle et une matrice correspondante (22) ou matrice femelle, reliés par un moyen de guidage mutuel, ce poinçon (21) et cette matrice (22) pouvant être placés entre le poussoir (11) et l'enclume (12) pour le découpage à l'emporte-pièce du disque (D) agencé entre le poinçon (21) et la matrice (22), avec lequel une figure (F) est formée.

2. Système selon la revendication 1, **caractérisé en ce qu'**il comprend un outil (3) avec un siège (31) pour la mise en place d'une capsule (C) par son embout, et une lame (32) dans ledit siège (31) pour l'ouverture de l'embout de la capsule (C) avant sa mise en place, une fois vidée, dans le moyen de pressage.

3. Système selon l'une quelconque des revendications précédentes, **caractérisé en ce que** le poussoir (11) et l'enclume (12) ont leurs côtés opposés formés avec des reliefs (13) pour la formation du contour du disque (D).

4. Système selon la revendication 3, **caractérisé en ce que** le poinçon (21) et la matrice (22) ont une conformation correspondante sur leurs faces extérieures pour l'accouplement sur les faces opposées du poussoir (11) et de l'enclume (12).

5. Système selon l'une quelconque des revendications précédentes, **caractérisé en ce que** le moyen de guidage comprend une jupe semi-tubulaire (23) s'étendant en face du poinçon (21) et une fente (24) pour le logement de ladite jupe (23) dans la matrice (22), ce poinçon (21) et cette matrice (22) étant appropriés pour un déplacement axial mutuel, sans possibilité de rotation.

6. Procédé de formation de figures à partir de capsules et de récipients usagés, caractérisé en qu'il comprend les étapes :
- d'écrasement de la capsule (C) ou du récipient vide en un disque (D) au moyen d'un moyen de pressage,
- de formation d'une figure (F) par découpage à l'emporte-pièce à partir d'un disque (D) par des moyens de découpe insérés dans ledit moyen de pressage.

7. Procédé selon la revendication 6, caractérisé en qu'il comprend l'ouverture de l'intérieur de la capsule usagée (C) par un outil (3) qui ouvre son embout frontal pour permettre le vidage et l'extraction de son contenu.

8. Procédé selon l'une quelconque des revendications 6 à 7, caractérisé en que l'étape de découpe à l'emporte-pièce du disque (D) comprend la mise en place du disque (D) entre un poinçon (21) et une matrice (22), constituant tous deux les moyens de découpe et pouvant être placés dans le moyen de pressage de manière amovible et interchangeable.
